## Europäisches Patentamt

## European Patent Office

## Office européen des brevets

(11) Veröffentlichungsnummer: **0 207 051**
**B1**

(12) **EUROPÄISCHE PATENTSCHRIFT**

(45) Veröffentlichungstag der Patentschrift: **22.08.90**

(21) Anmeldenummer: **86890132.3**

(22) Anmeldetag: **09.05.86**

(51) Int. Cl.⁵: **G 06 F 15/16, F 02 D 41/24, F 02 D 41/26**

(54) **Mikrorechnersystem.**

(30) Priorität: **09.05.85 AT 1402/85**
**26.08.85 AT 2482/85**
**26.08.85 AT 2483/85**

(43) Veröffentlichungstag der Anmeldung:
**30.12.86 Patentblatt 86/52**

(45) Bekanntmachung des Hinweises auf die
Patenterteilung:
**22.08.90 Patentblatt 90/34**

(84) Benannte Vertragsstaaten:
**AT CH DE FR GB IT LI SE**

(56) Entgegenhaltungen:
**EP-A-0 127 789**
**WO-A-85/01137**
**US-A-4 112 490**

**PATENT ABSTRACTS OF JAPAN, Band 9, Nr. 90**
**(P-350)1813r, 19. April 1985; & JP-A-59 218 525**
**(MAITETSUKU K.K.) 08-12-1984**
**Elektronik, Jg. 1982, Heft 4, S.55-62**

(73) Patentinhaber: **VOEST-ALPINE AUTOMOTIVE**
**Gesellschaft m.b.H.**
**Muldenstrasse 5**
**A-4020 Linz (AT)**

(72) Erfinder: **Seibt, Artur, Dr.-Ing.**
**Prinz Eugenstrasse 6**
**A-1040 Wien (AT)**
Erfinder: **Kainz, Alois, Dipl.-Ing.**
**Varnhagengasse 17/3/11**
**A-1220 Wien (AT)**

(74) Vertreter: **Matschnig, Franz, Dipl.-Ing.**
**Siebensterngasse 54 Postfach 452**
**A-1071 Wien (AT)**

Courier Press, Leamington Spa, England.

**Beschreibung**

Die Erfindung bezieht sich auf ein Mikrorechnersystem, beispielsweise zum Einsatz in einem Regler für Brennkraftmaschinen zum Steuern und Regeln der Kraftstoffeinspritzung und weiterer Funktionen in einem Kraftfahrzeug in Abhängigkeit von Betriebsgrößen, wie z.B. Drehzahl, Ladedruck, Gaspedalstellung etc., die mit Hilfe von Meßwertgebern ermittelt werden, wobei Signalleitungen mit dem Mikrorechnersystem verbunden sind, dessen Ausgänge, gegebenenfalls über Ansteuerschaltungen, mit Stellgliedern, Signalanzeigen od.dgl. verbunden sind, das Mikrorechnersystem zumindest zwei Mikrorechner aufweist, wobei die Aufgaben auf die einzelnen Mikrorechner verteilt sind und ein Parameterspeicher für z.B. motor- und fahrzeugspezifische Daten vorgesehen ist, sowohl die einzelnen Mikrorechner als auch der vorzugsweise als steckbarer Modul ausgebildete Parameterspeicher an einen kombinierten, bidirektionalen Adreß- und Datenbus angeschlossen sind, der von den mikrorechner-internen Adreß- und Datenbussen unabhängig ist und ausschließlich zum Austausch von Daten bestimmt ist und zwischen den Parameterspeicher und den kombinierten Adreß- und Datenbus ein flankengetriggerter Adressenspeicher geschaltet ist.

Mikrorechnersysteme gelangen auf vielen Gebieten zum Einsatz und zufolge der ständig wachsenden Anforderungen in Hinblick auf die rasche Verarbeitung vieler anfallender Daten werden die Systeme auch immer komplexer, wobei in den meisten Fällen auch erhöhte Anforderungen an geringe Fehler- und Ausfallshäufigkeit gestellt werden. Im folgenden wird diese Problematik am Beispiel eines Reglers für Dieselmotoren erörtert, doch ergeben sich ähnliche Probleme auf vielen anderen Gebieten, beispielsweise auf dem Gebiet medizinischer Geräte.

Mit Hilfe eines Reglers werden z.B. bei Dieselmotoren die Einspritzmenge, der Einspritzzeitpunkt, die Abgasrückführung etc. in Abhängigkeit von verschiedenen Parametern gesteuert, wobei mittels Ansteuerschaltungen z.B. über einen Schrittmotor die Stellstange der Einspritzpumpe betätigt wird. Über verschiedene Sensoren werden dem Mikrorechnersystem Betriebsdaten zugeführt, wie z.B. die Motordrehzahl, die Wassertemperatur, der Lade- druck, die Kraftstofftemperatur u.s.w.

Aufgrund der Arbeitsweise eines Dieselmotors sind die Forderungen an die sichere Funktion eines elektronischen Regelgerätes bedeutend höher als bei bisher eingesetzten autoelektronischen Geräten. Ein Dieselmotor kann z.B. ohne Last auch mit einer sehr geringen Menge eingespritzten Brennstoffes bis zur Zerstörung durchgehen. Bei Fehlverhalten des Reglers sind jedoch schwere Unfälle auch schon möglich, bevor der Dieselmotor eine Drehzahl erreicht, die zu seiner Zerstörung führt; bisher bekanntgewordene Sicherheitseinrichtungen, die parallel zur eigentlichen Reglerelektronik bei Überschreiten einer Grenzdrehzahl für Abstellen des Motors sorgen, reichen deshalb nicht hin, um die für einen praktischen Einsatz eines solchen Reglers zur fordernde Sicherheit gegen Personen- und Sachschäden zu gewährleisten. Bekannt ist ferner die Methode, zwei Rechner parallel arbeiten zu lassen und das Ergebnis zu vergleichen. Ein solcher Einsatz der Rechner ist jedoch sehr unwirtschaftlich, und der Vergleich sagt nur aus, daß das Ergebnis fehlerhaft ist, jedoch im allgemeinen nicht, welcher der beiden Rechner fehlerhaft und welcher richtig arbeitet.

Eines der spezifischen Probleme beim Einsatz von Mikrorechnern in Kraftfahrzeugen liegt in dem Auftreten von elektrischen Störungen, die oft zu einem Fehlverhalten des Systems oder zu einem totalen Programmabsturz führen können. Die bisher bekannt gewordenen Regler arbeiten mit einem einzigen Mikrorechner und zumeist mit externem Programmspeicher (EPROM), wobei es sich um sogenannte "Multichip-Mikrorechner-Systeme" handelt, bei welchen die Adreß- und Datenbusse wie bei einem Mikroprozessor nach außen geführt sind. Dies bedeutet, daß elektrische Störungen sehr leicht aufgefangen werden. Der Datenverkehr auf Adreß- und Datenbussen erfolgt sehr rasch bei kleinen Pegeln, sodaß die Störsicherheit äußerst gering ist. Jede größere Störspitze kann zu einer Programm- oder Datenverfälschung und damit zu einem totalen Programmabsturz führen.

Um bei Programmabstürzen ein selbsttätiges Wiederanlaufen eines Mikrorechners zu erreichen, sind sogenannte Watchdog-Schaltungen bekannt; dies sind Zähler mit einer bestimmten Zählkapazität, die von einem mit Software erzeugten Signal aus dem Mikrorechner immer wieder auf den Anfangswert zurückgesetzt werden. Bei einem Programmabsturz hofft man, daß das Rücksetzsignal aussetzt, sodaß der Zähler schließlich überläuft, wodurch der Mikrorechner über seinen Reset-Eingang zurückgesetzt wird und im Programm gänzlich von vorne anfängt. Diese Methode ist nicht sicher, denn es gibt Fälle, in denen bei Fehlverhalten die Watchdog-Schaltung nicht ausgelöst wird.

Die für die Steuerung externer Bausteine, wie z.B. Programmspeicher, erforderlichen Anschlüsse (Ports) gehen für die Nutzanwendung des Mikrorechners verloren; man muß sie durch Hinzufügen sogenannter Port-Erweiterungsbausteine unter Aufwendung von Kosten, Platz und Verlustleistung wiedergewinnen, weiter führt dies zu einer teureren Stromversorgung und eventuell zu einem größeren Gehäuse mit Kühlrippen. Will man beispielsweise einen externen 4 K — Programmspeicher anschließen, so benötigt man zunächst dreizehn Adreßleitungen, dazu acht Datenleitungen, wodurch somit insgesamt einundzwanzig Anschlüsse für die Steuerung des eigentlichen Gerätes verlorengehen. Die meisten handelsüblichen Mikrorechner haben nur insgesamt zweiunddreißig Anschlüsse, sodaß nur noch elf Anschlüsse für die Steuerung übrig bleiben.

Es ist ferner bekannt, mehrere Prozessoren an gemeinsame Busse mit gemeinsamen Speichern anzuschließen und es ist auch bekannt, Einchipmikrorechner miteinander zu verbinden, wozu serielle Interfaces herangezogen werden, die oft bereits auf dem Chip vorgesehen sind. Soferne Parameterwerte in gesonderten Speichern enthalten sind, werden diese über die vorhandenen Busse angesteuert. Meist sind die Parameterwerte und das Programm jedoch im selben Speicher enthalten.

Ein aus der EP—A—127 789 bekannt gewordener Regler für Brennkraftmaschinen enthält genau zwei Mikroprozessoren, auf welche die verschiedenen Aufgaben verteilt sind. Zwischen beiden Prozessoren ist ein Bussystem vorgesehen. Ein "Personality Prom" enthält motor- bzw. fahrzeugspezifische Daten und steht über einen weiteren Bus mit dem ersten Mikroprozessor in Verbindung. Auf den parameterspeicher kann somit nur der erste Mikroprozessor direkt zugreifen, der zweite Mikroprozessor hingegen nur über den ersten Mikroprozessor. Dies bedeutet jedoch, daß einerseits der erste Mikroprozessor zusätzlich belastet wird und andererseits die Zugriffszeiten zum Parameterspeicher länger werden. Überdies ist die hier beschriebene Architektur ausschließlich bei zwei, nicht jedoch bei mehr Mikrorechnern anwendbar.

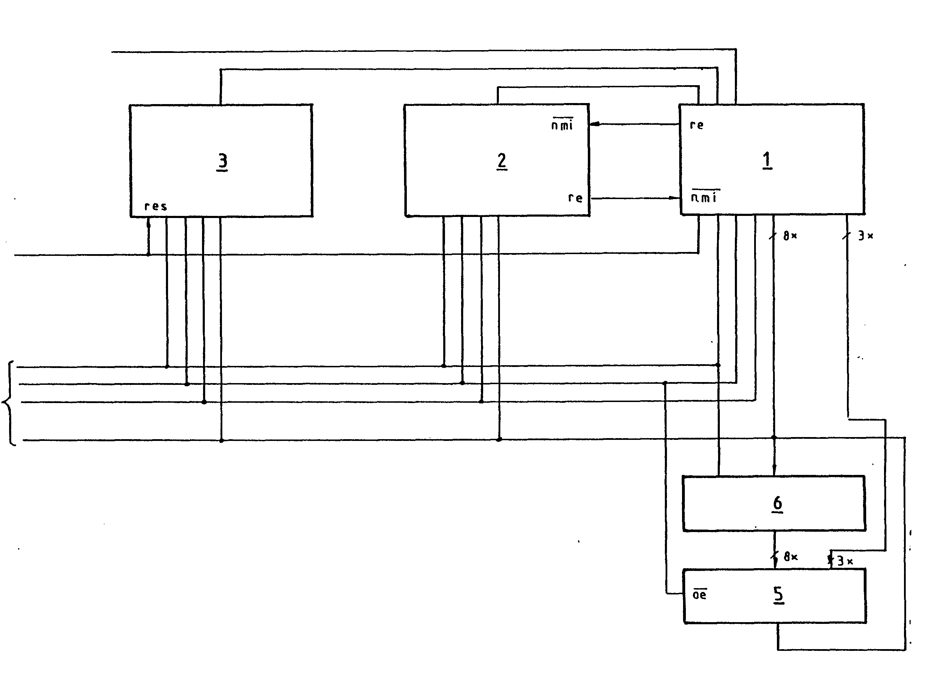

In "Elektronik" Jg. 1982, Heft 4, Seiten 55-62, sind verschiedene Multi-Mikroprozessor-Systeme beschrieben. Einzelnen Mikroprozessoren ist dabei über einen gemeinsamen Bus ein gemeinsamer Speicher zugeordnet (Bild 6 der Literaturstelle). Bei dem gemeinsamen Bus handelt es sich um einen rechnerinternen Bus, über den der gesamte Daten- und Adreßverkehr, d.h. auch die Programminformation, läuft. Dadurch ergibt sich jedoch als wesentlicher Nachteil die bereits oben angesprochene Störanfälligkeit derartiger Systeme.

Die US—A—4 112 490 beschäftigt sich mit der Datenübertragung zwischen der CPU und der Peripherie bei einem einzigen Mikrorechner, wobei zumindest ein Teil der Peripherieadressen gemultiplext wird, um hierdurch auf einem einzigen Chip mehr Systemfunktionen unterzubringen. Auf die Probleme der Verbindung mehrerer Mikrorechner geht dieses Dokument überhaupt nicht ein, jedoch ist die Verwendung flankengetriggerter Adressenzwischenspeicher bzw. zusätzlicher direkter Steuerleitungen zu einem Speicher nahegelegt.

Das Dokument WO—A—5801 137 beschreibt die Verbindung mehrerer Mikrorechner durch einen Bus, der, wenn auch nicht explizit geoffenbart, möglicherweise von den internen Bussen der Mikrorechner verschieden ist. Ferner wird die Verwendung eines allen Mikrorechnern zugänglichen, an diesen Bus angeschlossenen Datenspeichers erwähnt.

In dem Dokument JP—A—59—218525 ist ein einziger Mikrorechner beschrieben, bei welchem ein mechanischer Reset-Schalter mit dem nicht maskierbaren Interrupt-Eingang des Mikrorechners verbunden ist, um bei einem Reset nicht die in einem dynamischen RAM gespeicherte Information zu löschen.

Es ist ein Ziel der Erfindung, ein Mikrorechnersystem zu schaffen, das bei hoher und universeller Leistungsfähigkeit, z.B. in Hinblick auf den Einsatz in Kraftfahrzeugen, eine extreme Störfestigkeit aufweist, das vorteilhaft hinsichtlich Sicherheit, Kosten, Zuverlässigkeit und Platzbedarf ist, und bei dem eine gegenseitige Kontrolle der einzelnen Mikrorechner möglich und ein Fehlverhalten in der Kommunikation zwischen den einzelnen Rechnern rasch behebbar ist.

Dieses Ziel läßt sich mit einem Mikrorechnersystem der eingangs erwähnten Art erreichen, bei welchem erfindungsgemäß einer oder mehrere der Mikrorechner Restartausgänge aufweisen, die jeweils mit den nicht maskierbaren Interrupt-Eingängen anderer Mikrorechner verbunden sind.

Auf diese Weise wird bei einem Fehler der Rechner nicht in einen Anfangszustand versetzt, wie bei einem "reset". Dies würde nämlich zu einem Rücksetzen z.B. auch der gesamten Peripherie führen und überdies zu langen Erholungszeiten des Rechners führen, die z.B. bei Echtzeitanwendungen (Kraftfahrzeug) untragbar wären.

Es empfiehlt sich weiters, wenn für eine Anzahl der Adreßbits eine Steuerleitung zwischen einem (ersten) Mikrorechner und dem Parameterspeicher vorgesehen ist. Hierdurch ergibt sich eine bevorzugte Zugriffsmöglichkeit des ersten Mikrorechners zu dem Parameterspeicher, die deshalb zweckmäßig ist, da der erste Mikrorechner die wesentlichen Regelungsaufgaben zu übernehmen hat und die externe Kommunikation betreibt.

Die Erfindung samt ihren weiteren Vorteilen und Merkmalen ist im folgenden an Hand einer beispielsweisen Ausführungsform näher beschrieben, die in der Zeichnung veranschaulicht ist. Diese zeigt das Blockschaltbild eines Mikrorechnersystems nach der Erfindung.

Bei dem dargestellten Ausführungsbeispiel sind drei Mikrorechner 1, 2, 3 gezeigt, doch könnte z. B. ein vierter Mikrorechner vorhanden sein. Für den Datenverkehr zwischen den einzelnen Mikrorechnern ist ein softwaremäßig erzeugter, kombinierter bidirektionaler Adreß-und Datenbus 4 vorgesehen, der mehrere Steuerleitungen aufweist und an die Anschlüsse der einzelnen Mikrorechner angeschlossen ist. Die Steuerleitungen übernehmen z.B. die Funktionen Busy, Request/Ready, Output enable etc. Der Datenverkehr über den Bus 4 erfolgt, verglichen mit dem Datenverkehr auf den Adreß- und Datenbussen der einzelnen Mikrorechner, extrem langsam, wodurch die Störsicherheit entscheidend steigt. Die eigentlichen Datenbusse bleiben auf die wenigen Quadratmillimeter der Chips beschränkt und sind unstörbar. Alle Eingänge und Ausgänge verlaufen über die Anschlüsse, die vom Programm verhältnismäßig selten abgefragt werden. Die Abfrage erfolgt hierbei intern durch Takten eines D—Flipflops, das die Daten nur während der Dauer der Taktflanke übernimmt. Die Wahrscheinlichkeit, daß die Flanke einer Störung mit der Abfragetaktflanke zusammenfällt ist dabei äußerst gering. Sollte dies dennoch vorkommen, so ist die Wahrscheinlichkeit einer Wiederholung sehr gering. Über die Anschlüsse (Ports) kann das Programm hierbei überhaupt nicht gestört werden. Wenn man also dafür sorgt, daß die Daten gesichert werden, dann können eventuelle Datenstörungen erkannt und unschädlich gemacht werden.

Für die Speicherung anwendungsspezifischer, z.B. motoroder fahrzeugspezifischer Daten, ist ein Parameterspeicher 5 vorgesehen, dem ein Adressenspeicher 6 vorgeschaltet ist. Über den Bus 4 steht der Parameterspeicher 5 allen Mikrorechnern zur Verfügung, jedoch ist der erste Rechner 1 bevorzugt, da diesem, wie weiter unten noch näher erläutert, die wesentliche Regelungsaufgabe zugeordnet ist und er auch die externe Kommunikation betreibt. Über den Bus 4 wird zunächst z.B. ein 8 Bit—Adreßwort ausgegeben. Dieses wird dann in den Adressenspeicher (octal latch) geladen, der sodann diese Werte an die Adreßeingänge des Speichers 5 legt. Anschließend wird der Bus 4 auf Eingang geschaltet, sodann wird der Speicher aktiviert, und zwar durch Anlegen der Speisespannung und Belegen des Eingangs "Output enable" oe. Es sei an dieser Stelle erwähnt, daß zur Verminderung der Erwärmung des Speicherbausteines und zur Erhöhung seiner Zuverlässigkeit die Speisespannung nur beim Lesen über einen nicht gezeigten Transistorschalter an den Parameterspeicher (vorzugsweise ein PROM) gelegt wird. Hiedurch schaltet sich der Speicher 5 auf den Bus 4, zuletzt liest der betreffende Mikrorechner den Bus. Die oberen drei Adreßbits müssen über eine eigene Steuerleitung von dem Mikrorechner 1 angelegt werden, d.h. die übrigen Mikrorechner 2, 3 müssen erst die Kommunikation mit dem ersten Mikrorechner 1 aufbauen, wenn sie den Speicher 5 ansprechen wollen. Wenn sich beispielsweise in dem Speicher ein RAM befindet, kann der Mikrorechner 1 auch in den Speicher schreiben und er kann auch den Speicherinhalt über die externe Kommunikation nach außen weitergeben. Die Daten können nach bekannten Methoden gesichert sein, sodaß Fehler durch Unterbrechungen, Kurzschlüsse, Störungen etc. erkannt werden. Dadurch ist sichergestellt, daß der Regler nicht mit falschen Daten arbeiten kann, was zu einer Motorzerstörung oder zu schweren Unfällen führen könnte.

Wesentlich ist auch, daß die einzelnen Aufgaben, die dem Mikrorechnersystem zufallen, auf die einzelnen Mikrorechner verteilt sind. Mit mehreren parallel arbeitenden Mikrorechnern läßt sich eine unvergleichlich höhere Leistung erzielen, als mit einem einzelnen größeren Mikrorechner. In einem Mikrorechner werden die diesem zugeteilten Aufgaben nacheinander durchgeführt. Im Falle der Regelung von Motoren, d.h. bei Echtzeitaufgaben, müssen schnelle Ereignisse bearbeitet und bestimmte Signale, wie z.B. die Steuersignale für die Regelstange eines Dieselmotors, schnell ausgegeben werden, was bedeutet, daß bei Verwendung eines einzigen Mikrorechners ständig über Unterbrechungen (Interrupts) die Priorität geändert und die laufende Arbeit durch Hineinschachteln anderer Aufgaben unterbrochen werden müßte. Durch die Verwendung mehrerer selbständiger Mikrorechner können diese jedoch ungestört gleichzeitig arbeiten und sich ohne weiteres Echtzeitaufgaben widmen.

Bei dem erfindungsgemäßen System können z.B. dem Mikrorechner 1 die folgenden Aufgaben zugeordnet sein: Regelung, Erfassung der Signale von Drucksensoren, Temperatursensoren, Gaspedalsensoren, eines Lichtmaschinensignales, externe Kommunikation, Master der internen Kommunikation, Direktzugriff zum Programmspeicher. Eventuell kann der Mikrorechner 1 auch noch die Abgasrückführung der Brennkraftmaschine übernehmen.

Der Mikrorechner 2 kann z.B. für die Ansteuerung eines Stellmotors (Schrittmotors) für die Einspritzpumpe, für die Steuerung des Stellmotorrückmelders und die Bearbeitung dessen Signale, für die Drehzahlmessung, für Steuereingänge und für Kontrollampen herangezogen werden. Weitere Aufgaben können dem Mikrorechner 3 und gegebenenfalls einem vierten Mikrorechner zugeordnet sein. Zu Betriebsbeginn wird abgefragt, wieviele Mikrorechner vorhanden sind, wobei sich die einzelnen Mikrorechner hierbei melden müssen. Das gesamte System konfiguriert sich sodann automatisch.

Durch die Verteilung der Aufgaben wird es möglich, auch andere Stellglieder, welche z.B. Ventile betätigen, den Einspritzzeitpunkt ändern oder eine Abgasrückführklappe verstellen, anzusteuern, ohne den Rest des Reglers zu beeinflussen. Es muß bloß das Programm des entsprechenden Mikrorechners geändert und die angeschlossene Hardware ausgetauscht werden. Auf diese Weise ist es möglich, rasch auf besondere Kundenwünsche zu reagieren und den Aufwand für die Software zu beschränken. Die Verteilung der Aufgaben auf verschiedene Einchip-Mikrorechner ist Voraussetzung, um kostengünstig weitere Funktionen des Reglers zu ermöglichen, die bis jetzt in getrennten Geräten untergebracht waren, z.B. die Steuerung automatischer Getriebe, von Bordrechnern etc.. Es ist nichts weiter erforderlich, als bei Bedarf einen weiteren Mikrorechner an den internen Bus 4 anzuschließen, wodurch der Zugang zu allen Sensordaten und allen Reglerdaten gegeben ist und dem Regler direkt Befehle, etwa eine Maximaldrehzahl einzuhalten, gegeben werden können. Der große Aufwand für einen externen Datenverkehr entfällt.

Trotz der verteilten Aufgaben ist eine gegenseite Kontrolle der Mikrorechner möglich. Der interne Datenverkehr verläuft intensiv und kann auch durch die Software intensiv gehalten werden, sodaß in Millisekunden auffällt, wenn ein Mikrorechner nicht ordnungsgemäß arbeitet. Wie in dem Schaltbild gezeigt, kann eine gegenseitige Synchronisation von zwei Mikrorechnern dadurch erfolgen, daß der Restart—Ausgang re des einen Mikrorechners 1 mit dem nicht maskierbaren interrupt-Eingang nmi des anderen Mikrorechners verbunden ist. Funktioniert ein Mikrorechner nicht mehr ordnungsgemäß, so wird über den anderen Mikrorechner ein Restart-Befehl an den nmi-Eingang gegeben, um das Programm an die Anfangsadresse zu setzen. Dies wird einige Male versucht; ist es auf diese Weise nicht möglich, den gestörten Mikrorechner in den richtigen Betrieb überzuführen, so kann der Regler entweder in einen Notbetrieb 40 übergehen oder eine Notabschaltung durchführen.

**Patentansprüche**

1. Mikrorechnersystem, beispielsweise zum Einsatz in einem Regler für Brennkraftmaschinen zum Steuern und Regeln der Kraftstoffeinspritzung und weiterer Funktionen in einem Kraftfahrzeug in Abhängigkeit von Betriebsgrößen, wie z.B. Drehzahl, Ladedruck, Gaspedalstellung etc., die mit Hilfe von Meßwertgebern ermittelt werden, wobei Signalleitungen mit dem Mikrorechnersystem verbunden sind, dessen Ausgänge, gegebenenfalls über Ansteuerschaltungen, mit Stellgliedern, Signalanzeigen od.dgl. verbunden sind, das Mikrorechnersystem zumindest zwei Mikrorechner aufweist, wobei die Aufgaben auf die einzelnen Mikrorechner verteilt sind und ein Parameterspeicher für z.B. motor- und fahrzeugspezifische Daten vorgesehen ist, sowohl die einzelnen Mikrorechner (1, 2, 3) als auch der vorzugsweise als steckbarer Modul ausgebildete Parameterspeicher (5) an einen kombinierten, bidirektionalen Adreß- und Datenbus (4) angeschlossen sind, der von den mikrorechner-internen Adreß- und Datenbussen unabhängig ist und ausschließlich zum Austausch von Daten bestimmt ist und zwischen den Parameterspeicher (5) und den kombinierten Adreß- und Datenbus (4) ein flankengetriggerter Adressenspeicher (6) geschaltet ist, dadurch gekennzeichnet, daß einer oder mehrere der Mikrorechner (1, 2) Restartausgänge (re) aufweisen, die jeweils mit den nicht maskierbaren Interrupt-Eingängen (nmi) anderer Mikrorechner (2, 1) verbunden sind.

2. Mikrorechnersystem nach Anspruch 1, dadurch gekennzeichnet, daß für eine Anzahl der Adreßbits eine Steuerleitung zwischen einem (dem ersten) Mikrorechner (1) und dem Parameterspeicher (5) vorgesehen ist.

**Revendications**

1. Système à micro-ordinateurs par exemple destiné à être utilisé dans un régulateur de moteur à combustion interne pour la commande et la régulation de l'injection du carburant et l'exécution d'autres fonctions dans un véhicule automobile, en fonction de grandeurs de fonctionnement comme par exemple la vitesse de rotation, la pression de suralimentation, le réglage de la pédale d'accélérateur, etc, qui sont déterminés à l'aide de capteurs de mesure, les conducteurs de transmission des signaux étant reliés au système à micro-ordinateurs, dont les sorties sont raccordées, éventuellement par l'intermédiaire de circuits de commande, à des circuits de réglage, des dispositifs d'affichage de signaux ou analogues, et dans lequel les tâches sont réparties entre les différents micro-ordinateurs et il est prévu une mémoire de paramètres par exemple pour des données spécifiques au moteur et au véhicule, et aussi bien les différents micro-ordinateurs (1, 2, 3) que la mémoire de paramètres (5), réalisée de préférence sous la forme d'un module enfichable, sont raccordés à un bus bidirectionnel combiné (4) de transmission d'adresses et de données, qui est indépendant des bus de transmission d'adresses et de données, qui sont internes aux microordinateurs, et sert exclusivement à l'échange de données, et une mémoire d'adresses (6), déclenchée par des flancs d'impulsions, est branchée entre la mémoire de paramètres (5) et le bus combiné (4) de transmission d'adresses et de données, caractérisé en ce qu'un ou plusieurs des micro-ordinateurs (1, 2) possèdent des sorties de redémarrage (re), qui sont reliées respectivement aux entrées d'interruption non masquables (nmi) d'autres micro-ordinateurs (2, 1).

2. Système à micro-ordinateurs selon la revendication 1, caractérisé en ce que pour un certain nombre des bits d'adresses, il est prévu un conducteur de commande disposé entre un (le premier) micro-ordinateur (1) et la mémoire de paramètres (5).

**Claims**

1. A microcomputer system, for example for use in a controller for internal combustion engines for controlling and regulating fuel injection and other functions in a motor vehicle in dependence on operating variables such as, for example, speed, charging pressure, accelerator position etc., detected by means of sensors, signal lines being connected to the microcomputer system and having outputs connected to adjusting elements, signal displays or the like, via trigger circuits if required, the microcomputer system comprising at least two microcomputers, the functions being divided up over the individual microcomputers and a parameter memory being provided, for example, for engine and vehicle specific data, both the individual microcomputers (1, 2, 3) and the parameter memory (5) preferably in the form of a plug-in module being connected to a combined two-way address and data bus (4) which is independent of the microcomputerinternal address and data buses and which is intended solely for data exchange and a flank-triggered address memory (6) is connected between the parameter memory (5) and the combined address and data bus (4), characterised in that one or more of the microcomputers (1, 2) have restart outputs (re) each connected to the non-maskable interrupt inputs (nmi) of other microcomputers (2, 1).

2. A microcomputer system according to claim

EP 0 207 051 B1

1, characterised in that a control line is provided for a number of address bits between one (the first) microcomputer (1) and the parameter memory (5).